# FASCICULE DE BREVET EUROPEEN

(11) **EP 0 557 174 B1**
(45) Date de publication et mention de la délivrance du brevet: **23.04.1997**
(21) Numéro de dépôt: 93400373.2
(22) Date de dépôt: 16.02.1993
(51) Int. Cl.: A01N 37/18

(54) **Utilisation d'une association de N,N-diéthyltoluamide et de vanilline en tant que répulsif antipoux**
Verwendung einer Mischung von N,N-Diethyltoluamid und Vanillin als Vertreibungsmittel gegen Läuse
Use of a mixture of N,N-diethyltoluamide and vanillin as a repellent against lice

(30) Priorité: 18.02.1992 FR 9201831
(43) Date de publication de la demande: 25.08.1993
(73) Titulaire: CORYNE DE BRUYNES, MC-98000 Monaco (MC)
(72) Inventeur: Bonjean, Marie-Catherine, F-75008 Paris (FR)
(74) Mandataire: Casalonga, Axel

(56) Documents cités:
- CA-A- 1 106 278
- CHEMICAL PATENTS INDEX, DOCUMENTATION ABSTRACTS JOURNAL Section Ch, Week 9129, 18 Septembre 1991 Derwent Publications Ltd., London, GB; Class C, AN 211722

## Description

La présente invention concerne l'utilisation d'une association de N,N-diéthyltoluamide et de vanilline en tant que répulsif antipoux.

Il est bien connu que dans les écoles primaires, les enfants âgés notamment de 7 à 12 ans peuvent être atteints de pédiculose du cuir chevelu se traduisant par la présence de poux et de lentes. Les enfants non atteints de pédiculose peuvent le devenir rapidement au contact d'enfants porteurs de pédiculose. Or, le traitement de la pédiculose est contraignant dans la mesure où il demande du temps et doit être appliqué aux différents membres d'une même famille.

Par conséquent, la demanderesse a cherché à mettre au point un agent répulsif antipoux qui soit à la fois efficace, bien toléré et facile à appliquer.

Le N,N-diéthyltoluamide est un répulsif utilisé contre certains insectes, notamment les mouches, les moustiques, les aoûtats, les moucherons, les tiques, les puces et les sangsues. Ce composé, bien qu'étant un répulsif efficace, est volatil et a l'inconvénient d'être absorbé par la peau, ce qui diminue la durée de son efficacité. Pour prolonger son action, on l'a déjà utilisé en mélange avec de la vanilline ou 4-hydroxy-3-méthoxy-benzaldéhyde (A.A KHAN et al., Mosquito News, Juin 1975, pages 223-225).

La demanderesse a découvert avec surprise que le N,N-diéthyltoluamide, utilisé en association avec la vanilline, avait un effet répulsif sur les poux, l'isomère méta étant le plus actif. Une telle association, outre son efficacité, présente l'avantage d'être bien tolérée et d'avoir une odeur agréable.

La présente invention a donc pour objet l'utilisation d'une association de N,N-diéthyltoluamide, le N,N-diéthyl-m-toluamide étant une forme préférée, et de vanilline en tant que répulsif antipoux.

Une telle association peut se présenter sous forme de lotion, gel, crème, mousse ou spray aérosol.

La composition utilisée selon l'invention contient généralement 5 à 50% en poids, et de préférence 5 à 20% en poids, de N,N-diéthyltoluamide, sur la base du poids total de la composition.

Le rapport en poids N,N-diétlyltoluamide/vanilline peut aller de 1/0,01 à 1/3 et est de préférence compris entre 1/0,01 et 1/0,5.

Le N,N-diéthyltoluamide étant pratiquement insoluble dans l'eau, il est dissous dans l'éthanol, l'isopropanol, le propylène glycol, éventuellement en mélange avec de l'eau.

Lorsque la formulation utilisée selon l'invention se trouve sous forme de crème, elle contient outre l'eau et le solvant organique, des corps gras constitués par des huiles minérales, animales, végétales ou synthétiques, des alcools gras ou des esters d'acides gras, utilisés seuls ou en mélange. Elle contient aussi des émulsifiants tels que des tensio-actifs, anioniques, non ioniques, cationiques ou amphotères.

Lorsque la composition utilisée selon l'invention est sous forme de gel, elle contient également des épaississants tels que l'alginate de sodium, la gomme arabique, la bentonite et les dérivés cellulosiques ou encore des polymères carboxyliques.

Lorsque la composition utilisée selon l'invention se présente sous forme de mousse, elle contient un agent de moussage, en présence d'un gaz propulseur.

Les agents propulseurs utilisés dans les formulations sous forme de mousse ou de spray sont des propulseurs classiques tels que l'isobutane, le n-butane, le propane ou leur mélange, ainsi que l'azote.

La présente invention sera mieux illustrée à l'aide des exemples non limitatifs suivants:

### EXEMPLE 1

| **Spray répulsif antipoux** | |
|---|---|
| - N,N-diéthyl-m-toluamide | 10 g |
| - Vanilline | 3 g |
| - Ethanol | 45 g |
| - Eau déminéralisée | 42 g |
| - Azote | |

L'effet répulsif de cette composition, évalué à l'aide de poux adultes, est immédiat et se prolonge pendant les 8 et 16 heures qui suivent l'application.

Pour obtenir une meilleure efficacité du spray répulsif antipoux selon l'invention, il est préférable de l'appliquer deux fois par jour, matin et soir sur le cuir chevelu.

### EXEMPLE 2

| **Spray répulsif antipoux** | |
|---|---|
| - N,N-diéthyl-m-toluamide | 20 g |
| - Vanilline | 0,5 g |
| - Ethanol | 45 g |
| - Eau déminéralisée | 34,5 g |
| - Azote | |

L'efficacité de cette formule est bonne et se maintient pendant plusieurs heures, 8 heures et même 16 heures après application.

## Revendications

1. Utilisation d'une association de N,N-diétlyltoluamide et de vanilline en tant que répulsif antipoux.

2. Utilisation d'une association de N,N-diéthyl-m-toluamide et de vanilline en tant que répulsif antipoux.

3. Utilisation selon la revendication 1 ou 2, caractérisée par le fait que le rapport en poids N,N-diétlyltoluamide/vanilline est compris entre 1/0,01 et 1/3.

4. Utilisation selon l'une quelconque des revendications 1 à 3, caractérisée par le fait que le rapport en poids N,N-diéthyltoluamide/vanilline est compris entre 1/0,01 et 1/0,5.

5. Utilisation selon l'une quelconque des revendications 1 à 4, caractérisée par le fait que l'association N,N-diéthyl-toluamide/vanilline se trouve dans une composition répulsive sous forme de gel, lotion, mousse, spray aérosol ou crème.

6. Utilisation selon l'une quelconque des revendications 1 à 5, caractérisée par le fait que l'association N,N-diéthyltoluamide/vanilline se trouve dans une composition répulsive comprenant un solvant choisi parmi l'éthanol, l'isopropanol et le propylèneglycol, éventuellement en mélange avec de l'eau.

7. Utilisation selon l'une quelconque des revendications 1 à 6, caractérisée par le fait que la composition répulsive contient 5 à 50% en poids de N,N-diéthyltoluamide, sur la base du poids total de la composition.

8. Utilisation selon la revendication 7, caractérisée par le fait que la composition répulsive contient 5 à 20% en poids de N,N-diéthyltoluamide, sur la base du poids total de la composition.

9. Utilisation selon l'une quelconque des revendications 1 à 8, caractérisée par le fait que la composition répulsive contient d'autres adjuvants choisis parmi les corps gras, les émulsifiants, les épaississants et les propulseurs.

## Claims

1. Use of a combination of N,N-diethyltoluamide and vanillin as a louse-repellant.

2. Use of a combinationof N,N-diethyl-m-toluamide and vanillin as a louse-repellant.

3. Use according to Claim 1 or 2, characterized in that the N,N-diethyltoluamide/vanillin weight ratio is between 1/0.01 and 1/3.

4. Use according to any one of Claims 1 to 3, characterized in that the N,N-diethyltoluamide/vanillin weight ratio is between 1/0.01 and 1/0.5.

5. Use according to any one of Claims 1 to 4, characterized in that the N,N-diethyltoluamide/vanillin combination is in a repellent composition in gel, lotion, foam, aerosol spray or cream form.

6. Use according to any one of Claims 1 to 5, characterized in that the N,N-diethyltoluamide/vanillin combination is in a repellent composition comprising a solvent chosen from ethanol, isopropanol and propylene glycol, optionally mixed with water.

7. Use according to any one of Claims 1 to 6, characterized in that the repellent composition contains 5 to 50 % by weight of N,N-diethyltoluamide, based on the total weight of the composition.

8. Use according to Claim 7, characterized in that the repellent composition contains 5 to 20 % by weight of N,N-diethyltoluamide, based on the total weight of the composition.

9. Use according to any one of Claims 1 to 8, characterized in that the repellent composition contains other adjuvants chosen from fatty substances, emulsifiers, thickeners, and propellants.

## Patentansprüche

1. Verwendung einer Mischung aus N,N'-Diethyltoluamid und Vanillin als Abwehrmittel gegen Läuse.

2. Verwendung einer Mischung aus N,N'-Diethyl-m-toluamid und Vanillin als Abwehrmittel gegen Läuse.

3. Verwendung gemäß Anspruch 1 oder 2, dadurch gekennzeichnet, daß das Gewichtsverhältnis N,N'-Diethyltoluamid/Vanillin zwischen 1/0,01 und 1/3 liegt.

4. Verwendung gemäß einem der Ansprüche 1 bis 3, dadurch gekennzeichnet, daß das Gewichtsverhältnis N,N'-Diethyltoluamid/ Vanillin zwischen 1/0,01 und 1/0,5 liegt.

5. Verwendung gemäß einem der Ansprüche 1 bis 4, dadurch gekennzeichnet, daß die N,N'-Diethyltoluamid/Vanillin-Mischung in einem Abwehrmittelpräparat in der Form eines Gels, einer Lotion, eines Schaums, eines Aerosol-Sprays oder einer Creme vorliegt.

6. Verwendung gemäß einem der Ansprüche 1 bis 5, dadurch gekennzeichnet, daß die N,N'-Diethyltoluamid/Vanillin-Mischung in einem Abwehrmittelpräparat vorliegt, das ein Lösungsmittel aus der Reihe Ethanol, Isopropanol und Propylenglykol, gegebenenfalls in Form einer Mischung mit Wasser, enthält.

7. Verwendung gemäß einem der Ansprüche 1 bis 6, dadurch gekennzeichnet, daß das Abwehrmittelpräparat 5 bis 50 Gew.-% N,N'-Diethyltoluamid, bezogen auf das Gesamtgewicht des Präparats, enthält.

8. Verwendung gemäß Anspruch 7, dadurch gekennzeichnet, daß das Abwehrmittelpräparat 5 bis 20 Gew.-% N,N'-Diethyltoluamid, bezogen auf das Gesamtgewicht des Präparats, enthält.

9. Verwendung gemäß einem der Ansprüche 1 bis 8, dadurch gekennzeichnet, daß das Abwehrmittelpräparat weitere Hilfsstoffe aus der Gruppe der Fettkörper, Emulgatoren, Verdickungsmittel und Treibmittel enthält.
